# EUROPEAN PATENT SPECIFICATION

(11) **EP 3 254 745 B1**
(45) Date of publication and mention of the grant of the patent: **27.03.2019**
(21) Application number: 17174593.8
(22) Date of filing: 06.06.2017
(51) Int. Cl.: B01D 53/00, B01D 53/70

(54) **DRY VACUUM PUMP WITH ABATEMENT FUNCTION**
TROCKENVAKUUMPUMPE MIT SENKUNGSFUNKTION
POMPE À VIDE SÈCHE AYANT UNE FONCTION DE RÉDUCTION

(30) Priority: 08.06.2016 JP 2016114182; 23.03.2017 JP 2017057560
(43) Date of publication of application: 13.12.2017
(73) Proprietor: Ebara Corporation, Ohta-ku, Tokyo 144-8510 (JP)
(72) Inventor: YOSHIDA, Naoya, Tokyo, 144-8510 (JP); AOKI, Yasuteru, Tokyo, 144-8510 (JP); HOSOTANI, Kazumasa, Tokyo, 144-8510 (JP); SEKIGUCHI, Shinichi, Tokyo, 144-8510 (JP); KOMAI, Tetsuo, Tokyo, 144-8510 (JP)
(74) Representative: Schmidbauer, Andreas Konrad

(56) References cited:
- EP-A1- 2 784 321
- EP-A1- 2 923 751
- US-A- 5 769 626

## Description

### Field

The present technology relates to a dry vacuum pump that is equipped with a dry pump and has an abatement function to detox exhaust gas.

### Background

In a process of manufacturing a semiconductor device, a liquid crystal panel, a solar cell, or the like, process gas is introduced into an evacuated tool (process chamber), and various kinds of processing such as etching and CVD are performed. Also, cleaning gas is made to flow into such a tool, to regularly clean the tool.

The exhaust gas resulting from the process gas and the cleaning gas is hazardous, because the exhaust gas includes silane-based gas (such as SiH₄ or TEOS), halogen-based gas (such as NF₃, ClF₃, SF₆, or CHF₃), PFC gas (such as CF₄ or C₂F₆). Therefore, it is not preferable to release the exhaust gas into the atmosphere as it is. In view of this, it is necessary to detox the exhaust gas with an abatement system installed on the downstream side of the tool.

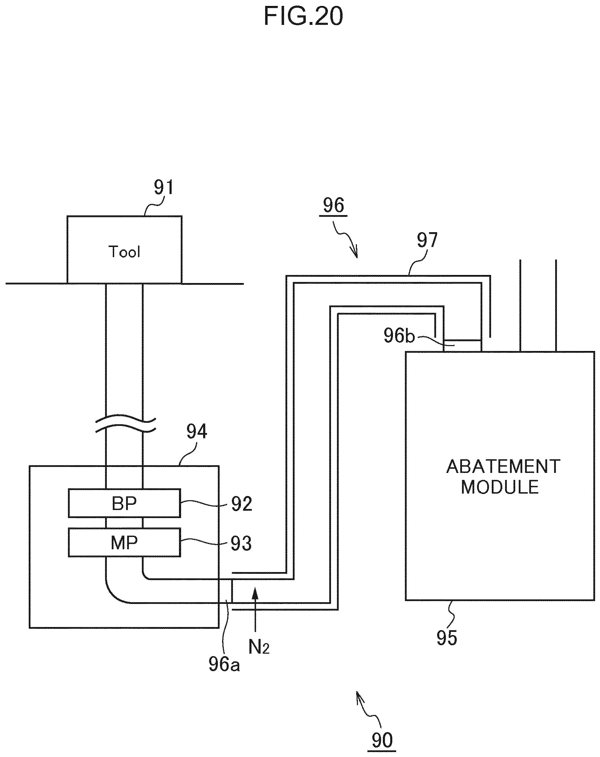

FIG. 20 is a schematic block diagram showing an example configuration of an abatement system 90. The abatement system 90 detoxes exhaust gas (such as process gas and cleaning gas) emitted from a tool 91, and is formed with a dry pump 94 including a booster pump 92 (BP) and a main pump 93 (MP), an abatement module 95, and the like. The exhaust gas sucked by the dry pump 94 is guided to the abatement module 95.

The main pump 93 in the dry pump 94 and the abatement module 95 are connected by a long pipe 96. The pipe 96 is connected to the dry pump 94 by a connecting member 96a, and is connected to the abatement module 95 by a connecting member 96b. Nitrogen gas (preferably Hot N₂) for diluting the exhaust gas is introduced into the pipe 96, to make the exhaust gas concentration in the pipe 96 equal to or less than the explosion limit. Further, since the pipe 96 is long, the temperature of the exhaust gas in the pipe 96 might drop to such a temperature that sublimation products will precipitate. Therefore, a heater 97 is attached to the pipe 96 to increase the temperature of the pipe 96.

JP 9-861 A discloses a vacuum pump device which comprises a series disposition of a Roots pump and a dry type rotor pump which is fixed on a base frame, and a suction duct of the device which is connected to a manufacturing equipment for semiconductor elements, and also its discharge side which is connected to a purifying equipment through a gas connecting duct. The purifying equipment is provided with a combustion furnace with a burner, and the gas feed duct is connected to the combustion furnace through a selector valve and a duct compartment. A reaction chamber is connected downwardly with the combustion furnace, and combustion gas in the reaction chamber is cleaned by cleaning fluid, and the cleaning fluid is returned eventually to a collection tank through a downcomer.

EP 2 923 751 A discloses a vacuum pump with abatement function which includes a vacuum pump to which at least one abatement part for treating an exhaust gas is attached. The vacuum pump comprises a dry vacuum pump having a pair of multistage pump rotors each of which comprises a plurality of rotors arranged on a rotating shaft, and the at least one abatement part is connected to an interstage of the multistage pump rotors.

EP 2 784 321 A discloses a vacuum pump which includes a vacuum pump having a discharge port to which an abatement part for treating an exhaust gas discharged from the vacuum pump to make the exhaust gas harmless is attached. The vacuum pump includes a cylindrical member having an exhaust gas introduction port for introducing the exhaust gas to be treated and a gas outlet port for discharging gases which have been treated, a plurality of fuel nozzles provided at a circumferential wall of the cylindrical member for ejecting a fuel, and a plurality of air nozzles provided at the circumferential wall of the cylindrical member for ejecting air so as to form a swirling flow of air along an inner circumferential surface of the circumferential wall. The air nozzles are disposed at a plurality of stages spaced in an axial direction of the cylindrical member.

US 5 769 626 B discloses an evacuation system with exhaust gas cleaning. Another vacuum evacuation system with a vacuum pump that is directly connected to an abatement unit by a connection pipe is described in US 2014/0290919 A1.

### Summary

In the dry pump 94, products may precipitate internally due to the process gas or corrode due to the cleaning gas, and therefore, regular maintenance is necessary. To minimize the down-time of the tool 91, it is desirable to perform so-called swap maintenance in which the main pump 93 in operation is replaced with a spare pump of the same type.

However, a conventional abatement system (FIG. 20) is large and is fixed in place, and therefore, swap maintenance is difficult.

The present disclosure has been made in view of those problems, and an object of the present disclosure is to provide a dry vacuum pump with an abatement function that is easy to be maintained.

In accordance with the present invention, a dry vacuum pump as set forth in claim 1 is provided. Further embodiments are inter alia disclosed in the dependent claims. In particular, one aspect of the present disclosure provides a dry vacuum pump having an abatement function. This dry vacuum pump includes: one or more dry pumps that evacuate exhaust gas emitted from a tool; and an abatement module that detoxes the exhaust gas evacuated by the dry pump(s). With this structure, swap maintenance can also be performed on the abatement module.

The dry vacuum pump also includes a flow path that connects the dry pump(s) directly to the abatement module in an undetachable manner. Thus, a very safe connection method designed to avoid gas leakage is provided.

Furthermore, as the dry pump(s) and the abatement module are connected directly to each other, maintenance becomes easier.

An exhaust port (11b, 41b) may be formed in a side surface of the dry pump (1), the abatement module (2) may include a combustion module (20) configured to burn the exhaust gas, and a nozzle (23c) configured to introduce the exhaust gas into the combustion module (20), and the flow path (3) may extend in a horizontal direction, one end of the flow path (3) being connected to the exhaust port (11b, 41b) of the dry pump (1), the other end of the flow path (3) being connected to the nozzle (23c) of the abatement module (2).

With this connection, the flow path can be made shorter.

An exhaust port (11b, 41b) may be formed in an upper surface of the dry pump (1), the abatement module (2) may include a combustion module (20) configured to burn the exhaust gas, and a nozzle (23c) configured to introduce the exhaust gas into the combustion module (20), and the flow path (3) may have an L shape formed with a vertical portion (3a) and a horizontal portion (3b), a lower end of the vertical portion (3a) being connected to the exhaust port (11b, 41b) of the dry pump (1), one end of the horizontal portion (3b) being connected to the nozzle (23c) of the abatement module (2).

As the amount of the exhaust gas to be processed increases, the combustion module needs to have a greater height. With this connection, however, the height of the combustion module can be increased by the amount equivalent to the height of the dry pump, and the height of the entire vacuum pump with an abatement function can be reduced.

An exhaust port (11b, 41b) may be formed in a lower surface of the dry pump (1), the abatement module (2) may include a combustion module (20) configured to burn the exhaust gas, and a nozzle (23c) configured to introduce the exhaust gas into the combustion module (20), and the flow path (3) may have an L shape formed with a vertical portion (3a) and a horizontal portion (3b), an upper end of the vertical portion (3a) being connected to the exhaust port (11b, 41b) of the dry pump (1), one end of the horizontal portion (3b) being connected to the nozzle (23c) of the abatement module (2).

Such a connection can be employed in a case where the amount of the exhaust gas to be processed by the abatement module does not need to be so large.

The combustion module (20) may have a cylindrical shape, and the nozzle (23c) may be formed on a side surface of the combustion module (20), and introduce the exhaust gas in a tangential direction of the combustion module (20).

With this structure, the exhaust gas can be efficiently detoxed.

The dry pump (1) may be one of a screw pump and a roots pump.

The dry pump (1) and the abatement module (2) may be combined into a movable module to enable swap maintenance.

The dry pump (1) may comprise: a first pump (1a) (for example, a booster pump) connected to the tool (200); and a second pump (1b) (for example, a main pump) detachably connected to the first pump (1a), the second pump (1b) being undetachably connected to the abatement module (2) by the flow path (3).

The abatement module (2) may include: at least two combustion modules (20a and 20b) configured to burn the exhaust gas; and a switching means (6) configured to connect one of the at least two combustion modules (20a and 20b) to the dry pump (1) .

A dry vacuum pump with an abatement function includes a dry pump and an abatement module that are connected directly to each other. Accordingly, maintenance of the abatement module becomes easier. Thus, the dangerous operation of removing the pipe between the dry pump and the abatement module can be avoided at the user factory.

### Brief description of drawings

FIG. 1 is a block diagram schematically showing the configuration of a dry vacuum pump 100 with an abatement function according to an embodiment.
FIG. 1A is a diagram showing a main pump 1b, an abatement module 2, and an overall control panel 4 that are detached from the dry vacuum pump 100 with an abatement function.
FIG. 2A is a cross-sectional view of a combustion module 20 that is a principal component of the abatement module 2.
FIG. 2B is a cross-sectional view taken along the line A-A defined in FIG. 2A.
Fig. 2C is a schematic diagram for explaining inputting/outputting of information to be performed between a tool 200 and the overall control panel 4 of the dry vacuum pump 100 with an abatement function, and various kinds of control to be performed between the overall control panel 4, and the dry pump 1, a diluent N₂ unit 7, and the abatement module 2.
FIG. 3 shows vertical cross-sectional views of screw pumps 10 that are examples of the main pump 1b.
FIG. 4 is a horizontal cross-sectional view of a screw pump 10.
FIG. 5 is a schematic diagram showing a first example connection between a screw pump 10 and the combustion module 20.
FIG. 6 is a schematic diagram showing a second example connection between a screw pump 10 and the combustion module 20.
FIG. 7 is a schematic diagram showing a third example connection between a screw pump 10 and the combustion module 20.
FIG. 8 is a schematic diagram showing a fourth example connection between a screw pump 10 and the combustion module 20.
FIG. 9 is a schematic diagram showing a fifth example connection between a screw pump 10 and the combustion module 20.
FIG. 10 shows vertical cross-sectional views of roots pumps 40 that are other examples of the main pump 1b.
FIG. 11 is a horizontal cross-sectional view of a roots pump 40.
FIG. 12 is a cross-sectional view taken along the line B-B defined in FIG. 11.
FIG. 13 is a schematic diagram showing a first example connection between a roots pump 40 and the combustion module 20.
FIG. 14 is a schematic diagram showing a second example connection between a roots pump 40 and the combustion module 20.
FIG. 15 is a schematic diagram showing a third example connection between a roots pump 40 and the combustion module 20.
FIG. 16 is a schematic diagram showing a fourth example connection between a roots pump 40 and the combustion module 20.
FIG. 17 is a block diagram showing a first modification of the embodiment shown in FIG. 1.
FIG. 18 is a block diagram showing a second modification of the embodiment shown in FIG. 1.
FIG. 19 is a block diagram showing a third modification of the embodiment shown in FIG. 1.
FIG. 20 is a schematic block diagram showing an example configuration of an abatement system 90.

### Detailed description

The following is a detailed description of an embodiment, with reference to the accompanying drawings.

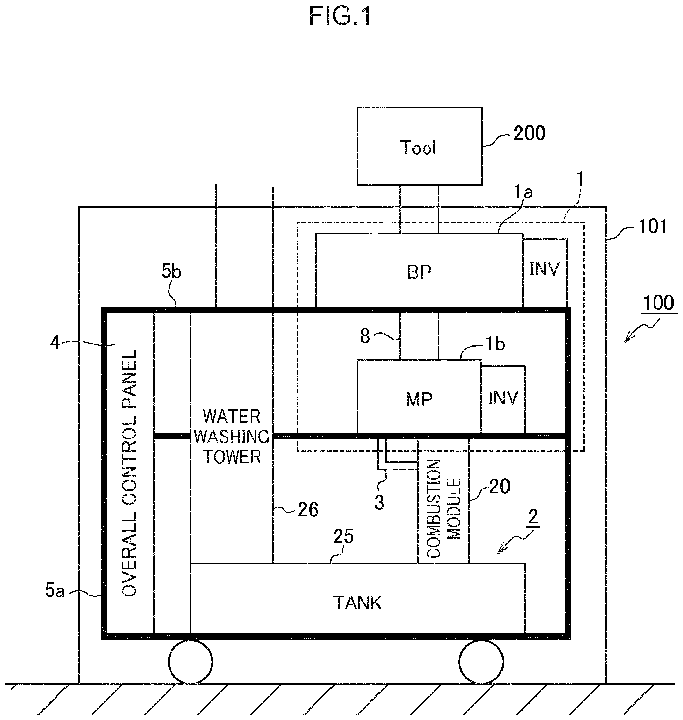

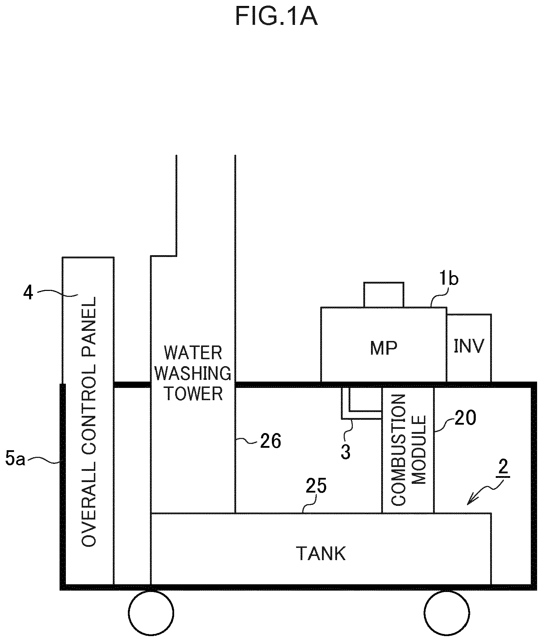

FIG. 1 is a block diagram schematically showing the configuration of a dry vacuum pump 100 with an abatement function according to an embodiment. The dry vacuum pump 100 with an abatement function detoxes exhaust gas emitted from a tool 200, and includes a dry pump 1, an abatement module 2, a flow path 3, an overall control panel 4, a lower frame 5a, and an upper frame 5b, which are packaged as indicated by reference numeral 101. The dry pump 1 includes a booster pump 1a (BP) and a main pump 1b (MP) each provided with an inverter (INV). The tool 200 is an apparatus for manufacturing semiconductor devices, liquid crystal panels, or solar cells, for example. The exhaust gas is process gas to be used in the tool 200, cleaning gas for cleaning, and the like.

The exhaust gas emitted from the tool 200 is evacuated by the booster pump 1a and the main pump 1b, and is guided to the abatement module 2 via the flow path 3. Specifically, the booster pump 1a connected to the tool 200 is a large-capacity pump, and is capable of evacuating a large flow of exhaust gas. The main pump 1b provided on the downstream side of the booster pump 1a compresses and releases the exhaust gas emitted from the booster pump 1a in each stage, to lower pressure and achieve a preferred degree of vacuum.

The abatement module 2 is formed with a combustion module 20, a tank 25, a water washing tower 26, and the like, and detoxes the exhaust gas. Specifically, the combustion module 20 burns the toxic gas and the flammable gas contained in the exhaust gas, for example, by adding air or oxygen to the exhaust gas and burning it. The exhaust gas after the burning is guided to the tank 25 containing water, and is then cooled. After that, water is injected into the exhaust gas in the water washing tower 26 filled with a resin member, and the water-soluble gas existing therein is removed. The detoxed gas is then released to the user factory exhaust line.

The overall control panel 4 controls operation of the booster pump 1a, the main pump 1b, and the abatement module 2. Although not shown in the drawing, the booster pump 1a, the main pump 1b, and the abatement module 2 are equipped with ports (not shown) for connecting utilities such as a power source, cooling water, nitrogen, and fuel necessary for operation.

In this embodiment, the booster pump 1a and the main pump 1b are connected by a pipe 8, but the pipe on the side of the booster pump 1a and the pipe on the side of the main pump 1b are connected by clamping, for example, and are designed to be detachable. Meanwhile, the main pump 1b and (the combustion module 20) in the abatement module 2 are connected directly to each other by the flow path 3 without a joint or the like (jointless). That is, the main pump 1b, the flow path 3 and the abatement module 2 are integrated as a module and can be neither detached nor removed (or are not supposed to be removed at least on the user factory side).

The main pump 1b and the abatement module 2 (and the overall control panel 4), which are integrated, are regarded as a movable module, and are installed in/on the lower frame 5a. These components and the above mentioned ports are accommodated in a frame 6. Casters are attached to the lower frame 5a so that the lower frame 5a can be easily transported. Further, the booster pump 1a is installed on the upper frame 5b. Except for utilities, the only connections between the outside, and the lower frame 5a and the upper frame 5b are the connection (vacuum piping) to the booster pump 1a and the connection for exhausting detoxed exhaust gas.

Such a configuration facilitates the swap maintenance of the abatement module 2. Specifically, the booster pump 1a is detached from the main pump 1b, and the main pump 1b and the abatement module 2 that are to be maintained is taken out of the dry vacuum pump 100 with the lower frame 5a (see FIG. 1A). Another lower frame 5a containing a spare (or replacement) main pump 1b and a spare (or replacement) abatement module 2 is introduced, and is connected to the booster pump 1a. As a result, the down-time of the tool 200 can be reduced. It is also possible to avoid the dangerous operation of removing the dry pump 1 and the abatement module 2 at the user factory.

As (the main pump 1b in) the dry pump 1 and the abatement module 2 are connected directly to each other as above, the following advantages can also be achieved. Since the distance between the two is short, the temperature of the exhaust gas in the flow path 3 hardly drops, and there is no need to prepare the heater 97 as shown in FIG. 20. Accordingly, heater construction and running costs can be saved. Further, there is no need to introduce the nitrogen gas for reducing the exhaust gas concentration. Accordingly, the total amount of gas to be processed by the abatement module 2 can be reduced, and the abatement module 2 can be made smaller in size. The fuel necessary for abatement, such as oxygen, can also be reduced. Furthermore, the diameter of the flow path 3 can be made smaller. Since no joints are used, the risk of exhaust gas leakage can also be reduced.

The following is a description of specific example configurations and connections of the abatement module 2 and the main pump 1b.

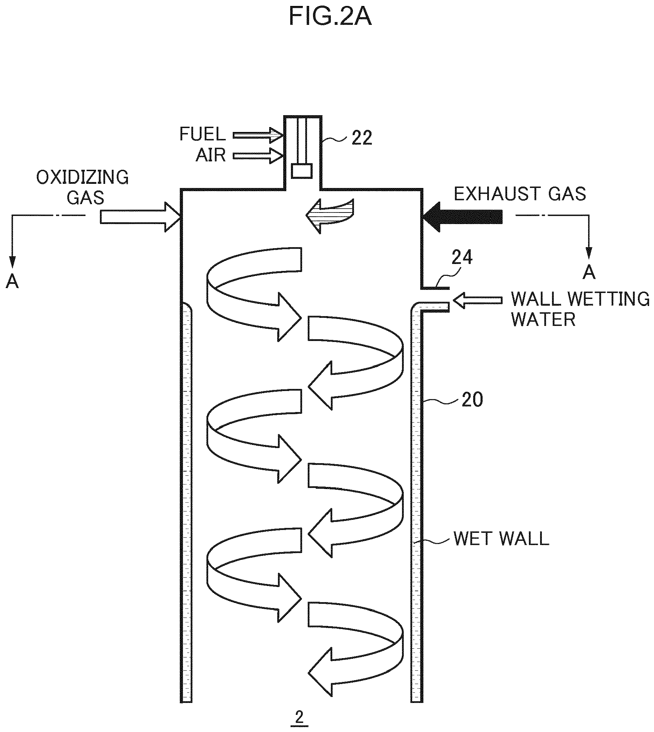

FIG. 2A is a cross-sectional view of the combustion module 20 as a principal component of the abatement module 2. The combustion module 20 has a cylindrical shape that has a closed upper end and an open lower end. Fuel (fuel gas), oxidizing gas (oxygen-containing gas), and the exhaust gas sucked by the dry pump 1 from the tool 200 are introduced in the vicinity of the upper end portion of the combustion module 20. Specifically, the upper portion of the combustion module 20 is connected directly to the main pump 1b by the flow path 3 as shown in Fig. 1. A pilot burner 22 for ignition is installed at the upper end portion of the combustion module 20 so that fuel and air can be supplied into the combustion module 20. A washing module or the like is provided below the combustion module 20 in practice, but is not shown in the drawings.

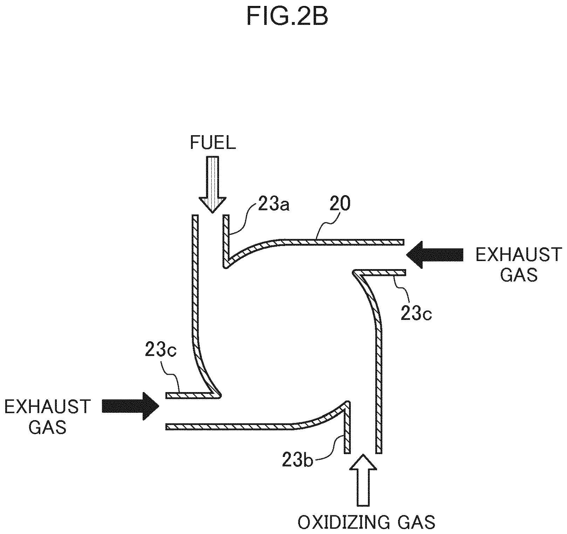

FIG. 2B is a cross-sectional view taken along the line A-A defined in FIG. 2A. As shown in the drawing, a fuel nozzle 23a for introducing fuel, an oxidizing gas nozzle 23b for introducing oxidizing gas, and exhaust gas nozzles 23c that are connected to the flow path 3 and introduce exhaust gas are provided in the tangential direction of the inner circumferential surface of the combustion module 20. The fuel nozzle 23a, the oxidizing gas nozzle 23b, and the exhaust gas nozzles 23c are located in the same plane perpendicular to the axis of the cylindrical combustion module 20, or, in other words, the openings of the three kinds of nozzles on the inner circumferential surface side of the combustion chamber are partially located in the same plane.

As shown in FIG. 2A, in the combustion module 20, a water supply nozzle 24 for supplying water to form a wet wall (water film) on the inner wall surface of the combustion module 20 is provided at a position slightly lower than the positions at which the fuel, the oxidizing gas, and the exhaust gas are introduced.

In the combustion module 20 configured as shown in FIGS. 2A and 2B, the fuel, the oxidizing gas, and the exhaust gas are introduced from the fuel nozzle 23a, the oxidizing gas nozzle 23b, and the exhaust gas nozzles 23c, respectively, in the tangential direction of the inner circumferential surface of the combustion module 20 at a flow rate equal to or higher than the flaming combustion speed. As a result, a cylindrical mixed flame that is formed with three kinds of flames and floats from the inner wall of the combustion module 20 is formed. The cylindrical mixed flame is formed in the axial direction of the combustion module 20.

As the three kinds of gases are introduced in the tangential direction, a swirling centrifugal force forms a distribution in which a low-temperature heavy unburnt mixed gas formed with the three kinds of gases exists on the outside of the cylindrical mixed flame, and a high-temperature light burnt mixed gas formed with the three kinds of gases exists on the inside of the cylindrical mixed flame. As a result, the cylindrical mixed flame is covered with the low-temperature unburnt mixed gas formed with the three kinds of gases, and thus, is in a self-insulated state. Therefore, gas processing with high combustion efficiency is performed without any temperature drop due to heat radiation.

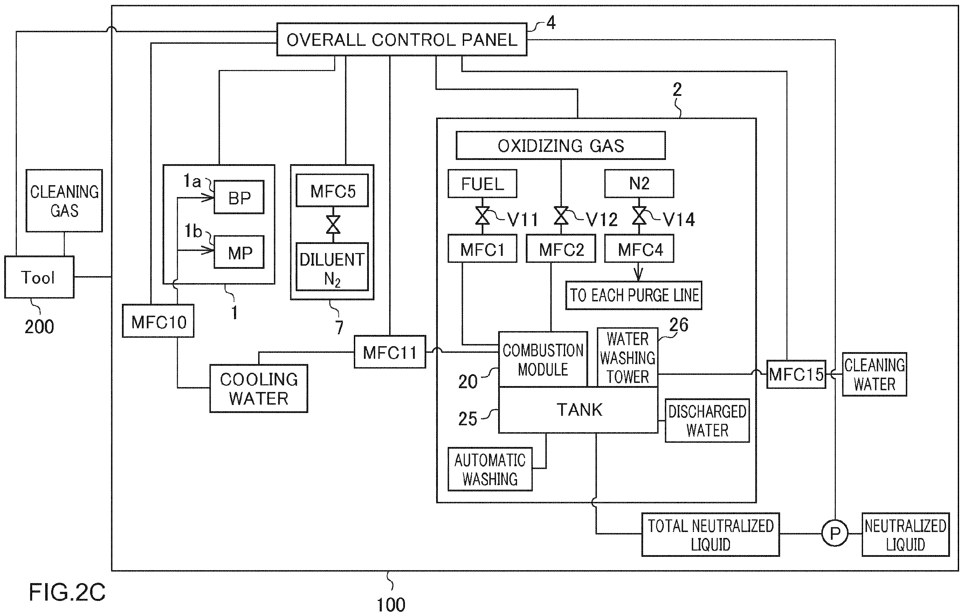

Fig. 2C is a schematic diagram for explaining inputting/outputting of information to be performed between the tool 200 and the overall control panel 4 of the dry vacuum pump 100 with an abatement function, and various kinds of control to be performed between the overall control panel 4, and the dry pump 1, a diluent N₂ unit 7, and the abatement module 2. The diluent N₂ unit 7 introduces a nitrogen gas into the dry pump 1, to prevent products from adhering to the inside of the dry pump 1.

The dry pump 1 introduces the diluent N₂ gas from the diluent N₂ unit 7 into the pump from the intake side of the final compression stage in accordance with the flow rate of the process gas flowing inside the pump. By doing so, the dry pump 1 can compress the process gas, without adversely affecting the exhaust performance of the pump or increasing the running costs. Thus, any solid matter is prevented from adhering to the inside of the pump in the final compression stage where the process gas becomes most concentrated, and corrosion can also be avoided.

The overall control panel 4 controls the flow rate of the N₂ gas to be supplied to the dry pump 1, in accordance with the current operation step in the tool 200 and information about the type and the flow rate of the gas supplied to the tool 200. The overall control panel 4 also controls the flow rate of the water and the electric power to be supplied to the dry pump 1, in accordance with the current operation step in the tool 200 and the information about the type and the flow rate of the gas supplied to the tool 200.

In FIG. 2C, the overall control panel 4 is shown as a controller that controls all the components of the dry vacuum pump 100 equipped with an abatement function. However, the overall control panel 4 may be formed as individual controllers attached to the respective components (the dry pump 1, the diluent N₂ unit 7, and the abatement module 2).

In the dry vacuum pump 100 with an abatement function shown in FIG. 2C, the current operation step in the tool 200, the type of the supplied gas, and the flow rate of the supplied gas are inputted from the tool 200 to the overall control panel 4. In an example case where the tool 200 is a CVD device, the respective operation steps of wafer insertion → vacuuming → temperature rise → film formation (material gas supply) → temperature drop → atmospheric pressure recovery → wafer removal are sequentially carried out in the tool 200, and these operation steps are repeated. Also, to remove solid matter adhering to the inside of the tool 200, a cleaning gas (such as HF, ClF₃, or NF₃) is regularly supplied into the tool 200, and thus, the tool 200 is evacuated.

The overall control panel 4 automatically controls the rotation speeds of the booster pump 1a and the main pump 1b of the dry pump 1, in accordance with the current operation step in the tool 200, the type of the supplied gas, and the flow rate of the supplied gas. Specifically, the booster pump 1a disposed on the vacuum side and the main pump 1b disposed on the atmosphere side are adjusted to the optimum rotation speeds corresponding to the current operation step in the tool 200, the type of the supplied gas, and the flow rate of the supplied gas.

In a case where the tool 200 is a CVD device, the optimum rotation speeds of the booster pump 1a and the main pump 1b in the respective operation steps are as follows.
1) Wafer insertion: The dry pump 1 does not need to be operated, but, if completely stopped, the dry pump 1 requires a long time to restart. Therefore, the dry pump 1 is operated at a power that is 20% lower than normal, for example, and vacuuming of the tool 200 is stopped with a valve.
2) Evacuate: The dry pump 1 is operated at 100% power.
3) Temperature rise: Since the vacuum state should be kept, the dry pump 1 is operated at 70% power, for example.
4) Deposition: As the material gas is supplied, the dry pump 1 is operated at 100% power.
5) Temperature drop: Since the inflow of gas stops, the dry pump 1 may be operated at a slightly lower power. Therefore, the dry pump 1 is operated at 70% power, for example.
6) Atmospheric pressure restoration: To prevent oxidizing, N₂ is made to flow into the tool 200. Although the dry pump 1 does not need to be operated, the dry pump 1 may be operated at a lower power, for the same reason as that in 1).
7) Wafer removal: same as 1).

In the vacuuming step, gas has not been supplied to the tool 200. Therefore, information indicating the vacuuming step is inputted from the tool 200 to the overall control panel 4, and information indicating no type of gas supplied and supplied gas flow rate of 0(zero) is inputted to the overall control panel 4. When gas is supplied to the tool 200, information indicating the current operation step, the type of the supplied gas, and the flow rate of the supplied gas is inputted from the tool 200 to the overall control panel 4. In the step of supplying gas to the tool 200, the overall control panel 4 automatically controls the rotation speeds of the booster pump 1a and the main pump 1b of the dry pump 1, in accordance with the type of the supplied gas and the flow rate of the supplied gas. Accordingly, the booster pump 1a and the main pump 1b can be operated with optimum exhaust performance for the type of the supplied gas and the flow rate of the supplied gas in the tool 200. Thus, the electric power to be used in the dry pump 1 can be reduced, and energy saving can be achieved.

In the abatement module 2, mass flow controllers MFC1 and MFC2 are provided on the pipes for the fuel and the oxidizing gas, respectively, so that the amounts of the fuel supply and the oxidizing gas supply to the combustion module 20 can be automatically adjusted. Also, shut-off valves V11 and V12 are provided on the pipes for the fuel and the oxidizing gas so that the supply of the fuel and the oxidizing gas to the combustion module 20 can be shut off in the manufacturing steps that do not require exhaust gas processing. Further, a mass flow controller MFC4 and a shut-off valve V14 are provided on the pipe for N₂.

The respective amounts of the fuel supply and the oxidizing gas supply corresponding to the current operation step in the manufacturing apparatus, the type of the supplied gas, and the flow rate of the supplied gas are stored into the overall control panel 4 in advance, and the mass flow controllers MFC1 and MFC2 are automatically controlled by a combination of feed forward and PID control. Specifically, the necessary amount of heat is automatically calculated by the overall control panel 4 from the type of the gas supplied to the tool, the flow rate of the gas supplied to the tool 200, and the flow rate of the N₂ supplied to the dry pump 1, and the amounts of the fuel supply and the oxidizing gas supply are automatically calculated. The amounts of the fuel supply and the oxidizing gas supply are then automatically adjusted by the mass flow controllers MFC1 and MFC2. Also, in the steps that do not require exhaust gas processing in the manufacturing apparatus, the shut-off valves V11 and V12 are operated to shut off the fuel supply. As a result, it is possible to reduce the electric power to be used in the abatement module 2, and reduce the amounts of the fuel supply and the oxidizing gas supply. Thus, energy saving can be achieved. To control the abatement module 2, the information from the tool 200 may be inputted to a controller for controlling the abatement module 2 independently, instead of the overall control panel 4.

When a predetermined amount of powder adhering to the dry pump 1, the abatement module 2, and the connection pipe between the tool 200 and the dry pump 1 is detected, a maintenance request signal is outputted to the tool 200, to notify the tool 200 of the adherence of the powder to those components in the dry vacuum pump 100 with an abatement function. This output may be conducted by the controllers for individually controlling the respective components of the dry vacuum pump 100 equipped with an abatement function, or may be conducted by the overall control panel 4. Adherence of powder in the dry vacuum pump 100 with an abatement function is detected from pressure (such as the vacuum pump exhaust pressure), a vacuum pump load ratio (such as power), a time of gas release from the manufacturing apparatus, and the like.

The maintenance signal may be transmitted not only to the tool 200, but also to a host computer (a computer that is connected to semiconductor manufacturing apparatuses and manages the semiconductor manufacturing apparatuses) of a higher order than the tool 200. In response to the transmitted maintenance signal, swap maintenance may be performed.

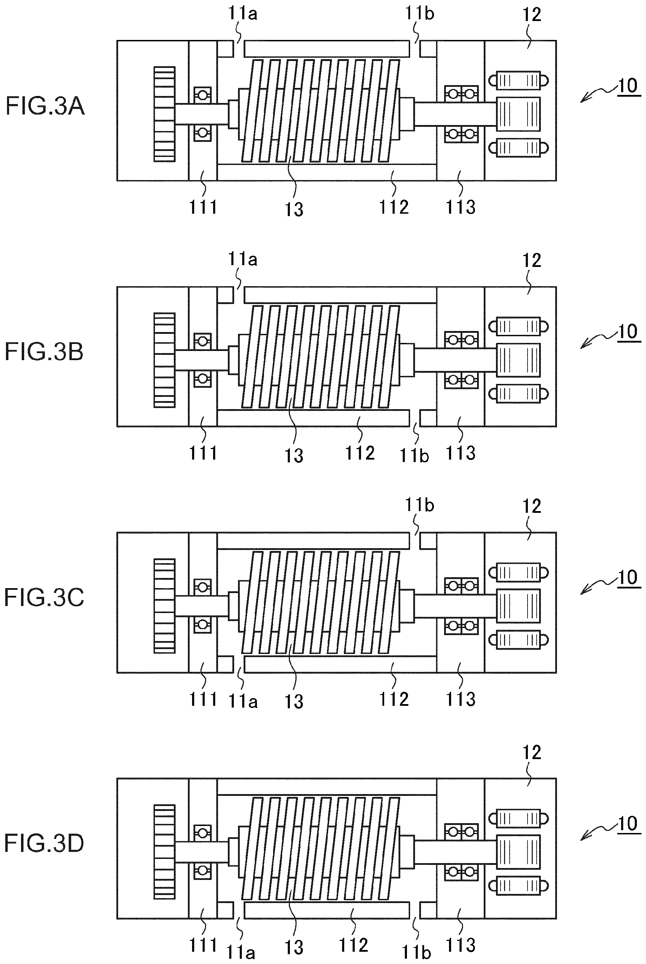

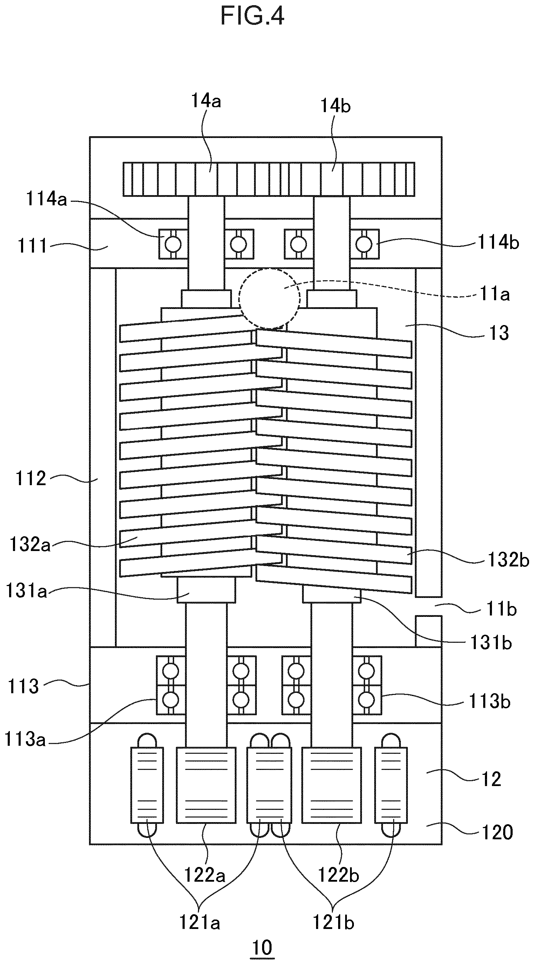

FIG. 3 shows vertical cross-sectional views (views seen from a side) of screw pumps 10 that are examples of the main pump 1b. FIG. 4 is a horizontal cross-sectional view (a view seen from above) of a screw pump 10. FIGS. 3 and 4 show transversely-installed screw pumps 10.

A screw pump 10 includes an intake-side housing 111, a casing 112, an exhaust-side housing 113, a motor module 12 provided outside the exhaust-side housing 113, and a pump module 13 provided in the casing 112. An intake port 11a and an exhaust port 11b are formed in the casing 112. The intake port 11a is connected to the booster pump 1a via the pipe 8 in FIG. 1, and the exhaust port 11b is connected directly to the abatement module 2 by the flow path 3. The intake port 11a and the exhaust port 11b may be formed at various locations.

In a case where the booster pump 1a is disposed above the main pump 1b as shown in FIG. 1, a screw pump 10 in which the intake port 11a is formed in the upper surface of the casing 112 (FIG. 3(a) or 3(b)) can be used. In a case where the booster pump 1a is disposed below the main pump 1b, on the other hand, a screw pump 10 in which the intake port 11a is formed in the lower surface of the casing 112 (FIG. 3 (c) or 3 (d)) can be used. Likewise, the exhaust port 11b may be formed in the upper surface of the casing 112 (FIG. 3 (a) or 3(c)), or may be formed in the lower surface of the casing 112 (FIG. 3(b) or 3(d)). Alternatively, the exhaust port 11b may be formed in a side surface of the casing 112.

As shown in FIG. 4, the motor module 12 includes a motor frame 120, stator windings 121a and 121b formed with stator cores and windings, and motor rotors 122a and 122b. The motor rotor 122a and the motor rotor 122b are attached to main shafts 131a and 131b, respectively. The main shafts 131a and 131b are rotatably supported by bearings 113a and 114a, and bearings 113b and 114b, respectively. The main shafts 131a and 131b overhang the motor module 12, and the motor rotors 122a and 122b are inserted/fastened (attached) to the tips of the overhanging main shafts.

The pump module 13 includes the main shaft 131a and a screw rotor 132a, and the main shaft 131b and a screw rotor 132b. The main shaft 131a is fixed to the screw rotor 132a, and the main shaft 131a and the screw rotor 132a may be integrally formed (processed). The same applies to the main shaft 131b and the screw rotor 132b. The main shafts 131a and 131b are made of metal, for example, and the motor rotors 122a and 122b are fastened to the respective main shafts 131a and 131b, respectively, at one end. At the other end, the main shafts 131a and 131b are rotatably supported by the bearings 114a and 114b fixed to the intake-side housing 111, and the bearings 113a and 113b fixed to the exhaust-side housing 113, respectively.

The main shafts 131a and 131b are synchronously rotate in opposite directions by timing gears 14a and 14b provided on the intake side, with a certain clearance being maintained. Thus, air is released. The timing gears 14a and 14b may be provided on either the intake side or the exhaust side.

The connection between a screw pump 10 and the combustion module 20 described above is now described in detail.

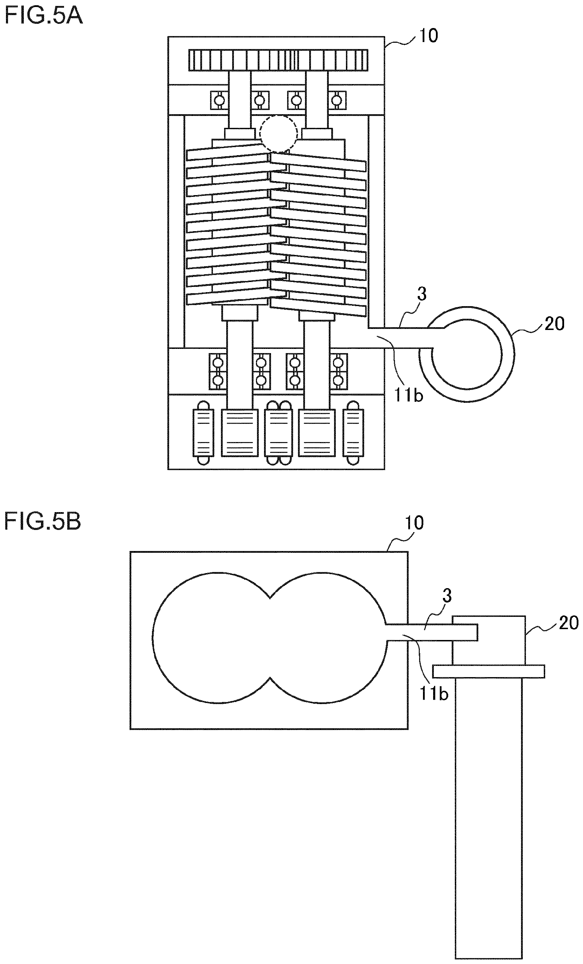

FIG. 5 is a schematic diagram showing a first example connection between a screw pump 10 and the combustion module 20. FIG. 5(a) is a top view of the screw pump 10 and the combustion module 20. FIG. 5(b) is a side view of the screw pump 10 and the combustion module 20. This drawing shows a transversely-installed screw pump 10. As shown in the drawings, the exhaust port 11b is formed in a side surface of the screw pump 10. One end of the flow path 3 extending in the horizontal direction is connected to the exhaust port 11b, and the other end is connected to an exhaust gas nozzle 23c of the combustion module 20.

By virtue of this connection, the flow path 3 can be made very short. Accordingly, even without a heater, the temperature of the exhaust gas passing through the flow path 3 hardly drops, and there is no need to reduce the exhaust gas concentration. Furthermore, as the screw pump 10 and the combustion module 20 are connected directly to each other, there is almost no possibility of leakage.

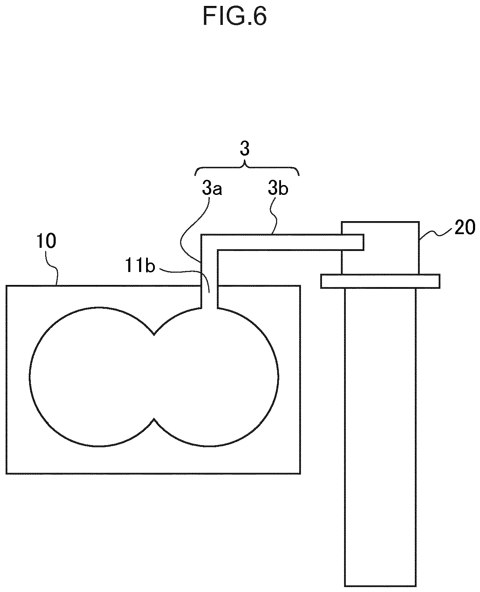

FIG. 6 is a schematic diagram showing a second example connection between a screw pump 10 and the combustion module 20, and is also a side view of the screw pump 10 and the combustion module 20. As shown in the drawing, the exhaust port 11b is formed in the upper surface of the screw pump 10. The flow path 3 has an L shape formed with a vertical portion 3a and a horizontal portion 3b. The lower end of the vertical portion 3a is connected to the exhaust port 11b, and one end of the horizontal portion 3b is connected to an exhaust gas nozzle 23c of the combustion module 20.

By virtue of this connection, the height of the combustion module 20 can be increased by the amount equivalent to the height of the screw pump 10. Accordingly, the processing capacity of the combustion module 20 can be increased. Alternatively, even in a case where the combustion module 20 becomes longer due to an increase in the amount of the exhaust gas to be processed, the screw pump 10 can be connected to the combustion module 20, without any change in the height of the screw pump 10. Thus, the height of the entire dry vacuum pump 100 with an abatement function can be reduced.

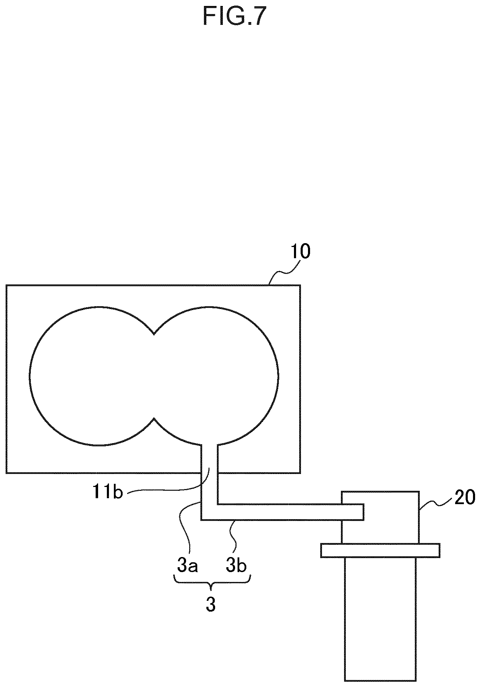

FIG. 7 is a schematic diagram showing a third example connection between a screw pump 10 and the combustion module 20, and is also a side view of the screw pump 10 and the combustion module 20. As shown in the drawing, the exhaust port 11b is formed in the lower surface of the screw pump 10. The flow path 3 has an L shape formed with a vertical portion 3a and a horizontal portion 3b. The upper end of the vertical portion 3a is connected to the exhaust port 11b, and one end of the horizontal portion 3b is connected to an exhaust gas nozzle 23c of the combustion module 20. Where the processing capacity of the combustion module 20 does not need to be very large, this connection can be employed.

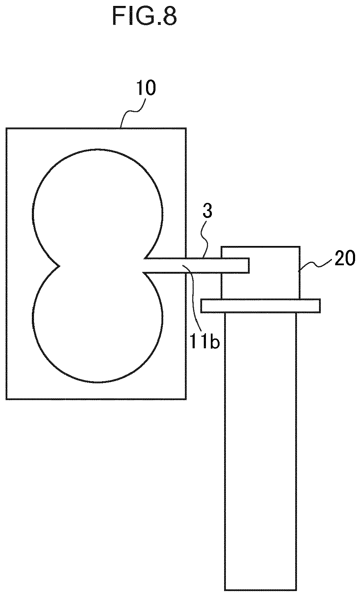

FIG. 8 is a schematic diagram showing a fourth example connection between a screw pump 10 and the combustion module 20, and is also a side view of the screw pump 10 and the combustion module 20. This drawing shows a vertically-installed screw pump 10. As shown in the drawing, the exhaust port 11b is formed in a side surface of the screw pump 10. One end of the flow path 3 extending in the horizontal direction is connected to the exhaust port 11b, and the other end is connected to an exhaust gas nozzle 23c of the combustion module 20. By virtue of this connection, the flow path 3 can be made very short.

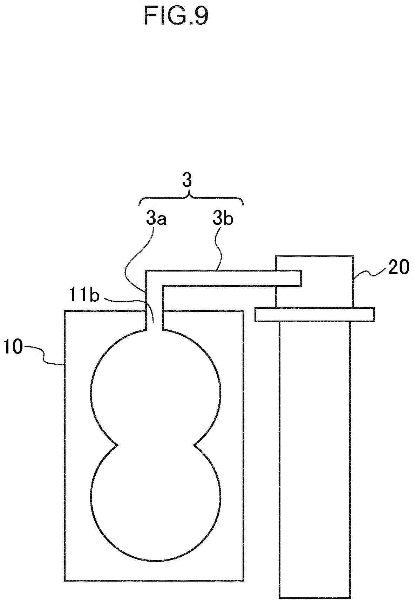

FIG. 9 is a schematic diagram showing a fifth example connection between a screw pump 10 and the combustion module 20, and is also a side view of the screw pump 10 and the combustion module 20. As shown in the drawing, the exhaust port 11b is formed in the upper surface of the screw pump 10. The flow path 3 has an L shape formed with a vertical portion 3a and a horizontal portion 3b. The lower end of the vertical portion 3a is connected to the exhaust port 11b, and one end of the horizontal portion 3b is connected to an exhaust gas nozzle 23c of the combustion module 20. By virtue of this connection, the height of the combustion module 20 can be increased. Alternatively, even in a case where the combustion module 20 becomes longer due to an increase in the amount of the exhaust gas to be processed, the screw pump 10 can be connected to the combustion module 20, without any change in the height of the screw pump 10. Thus, the height of the entire dry vacuum pump 100 with an abatement function can be reduced.

Next, an example case where a roots pump is used as the main pump 1b is described.

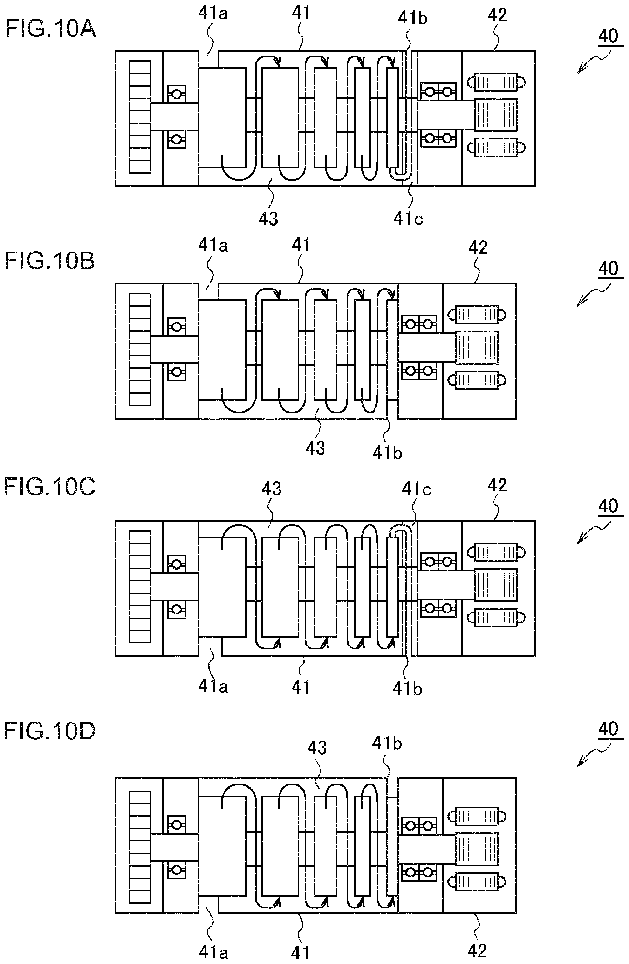

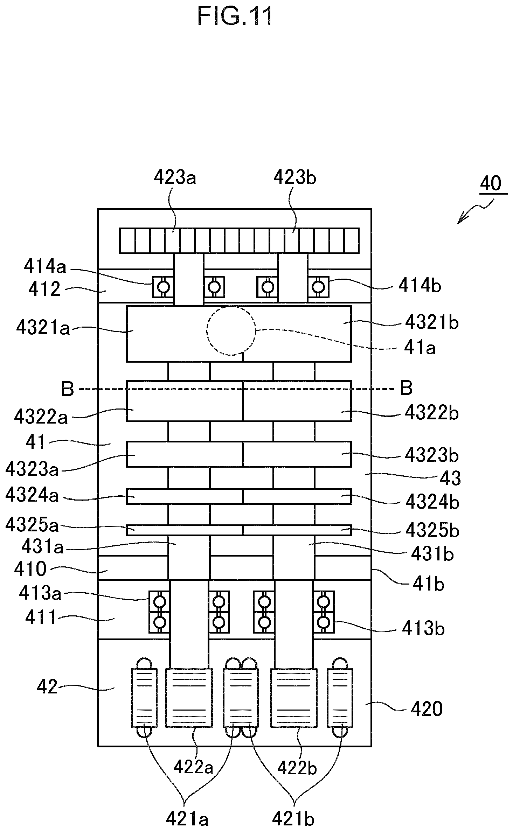

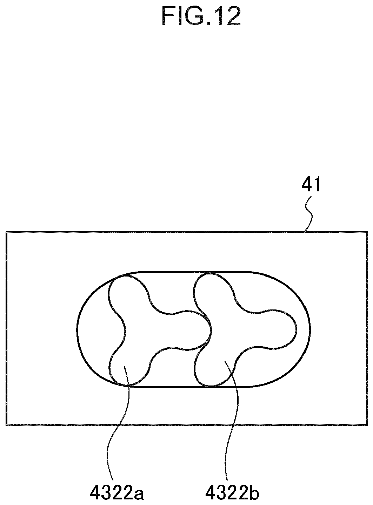

FIG. 10 shows vertical cross-sectional views (views seen from a side) of roots pumps 40 that are other examples of the main pump 1b. FIG. 11 is a horizontal cross-sectional view (view seen from above) of a roots pump 40. FIG. 12 is a cross-sectional view taken along the line B-B defined in FIG. 11. Although three-leafed roots pumps will be described below, two-leafed roots pumps or roots pumps with four or more leaves may also be used.

A roots pump 40 includes a casing 41, a motor module 42 provided on the side of one end in the casing 41, and a pump module 43 provided in the casing 41. An intake port 41a and an exhaust port 41b that connects to an intermediate chamber 410 are formed in the casing 41. The intake port 41a is connected to the booster pump 1a via the pipe 8 in FIG. 1, and the exhaust port 41b is connected directly to the abatement module 2 by the flow path 3. The intake port 41a and the exhaust port 41b may be formed at various locations.

In a case where the booster pump 1a is disposed above the main pump 1b as shown in FIG. 1, a roots pump 40 in which the intake port 41a is formed in the upper surface of the casing 41 (FIG. 10(a) or 10(b)) can be used. In a case where the booster pump 1a is disposed below the main pump 1b, on the other hand, a roots pump 40 in which the intake port 41a is formed in the lower surface of the casing 41 (FIG. 10(c) or 10(d)) can be used. Likewise, the exhaust port 41b may be formed in the upper surface of the casing 41 (FIG. 10 (a) or 10 (c)), or may be formed in the lower surface of the casing 41 (FIG. 10(b) or 10(d)). Alternatively, the exhaust port 41b may be formed in a side surface of the casing 41.

In the case of the roots pump 40 shown in FIG. 10(a) or 10(c), air is released through an exhaust adapter 41c.

As shown in FIG. 11, the motor module 42 includes a motor frame 420, stator windings 421a and 421b formed with stator cores and windings, and motor rotors 422a and 422b. The motor rotors 422a and 422b extend toward the pump module 43 and are rotatably supported by the bearings 413a, 413b, 414a, and 414b. The motor rotors 422a and 422b are synchronously rotated in opposite directions from each other (synchronous rotation in opposite directions) by timing gears 423a and 423b provided on the opposite side from the motor module 42.

The pump module 43 includes a main shaft 431a and roots rotors 4321a to 4325a, and a main shaft 431b and roots rotors 4321b to 4325b. The motor rotors 422a and 422b are fastened to the main shafts 431a and 431b, respectively. As the motor rotors 422a and 422b synchronously rotate in opposite directions, the roots rotors 1321a to 1325a and 1321b to 1325b synchronously rotate. The exhaust gas from the intake port 41a is sequentially transferred while being compressed by the roots rotors 1321a to 1325a and 1321b to 1325b, and is released from the exhaust port 41b through the intermediate chamber 410.

It should be noted that the intermediate chamber 410 is necessary in a case where both the intake port 41a and the exhaust port 41b are formed in the upper surface or the lower surface of the casing 41 (FIGS. 10(a) and 10(c)), and the intermediate chamber 410 is not necessary in a case where one of the ports 41a and 41b is formed in the upper surface while the other one is formed in the lower surface (FIGS. 10(b) and 10(d)).

The connection between a roots pump 40 and the combustion module 20 described above is now described in detail.

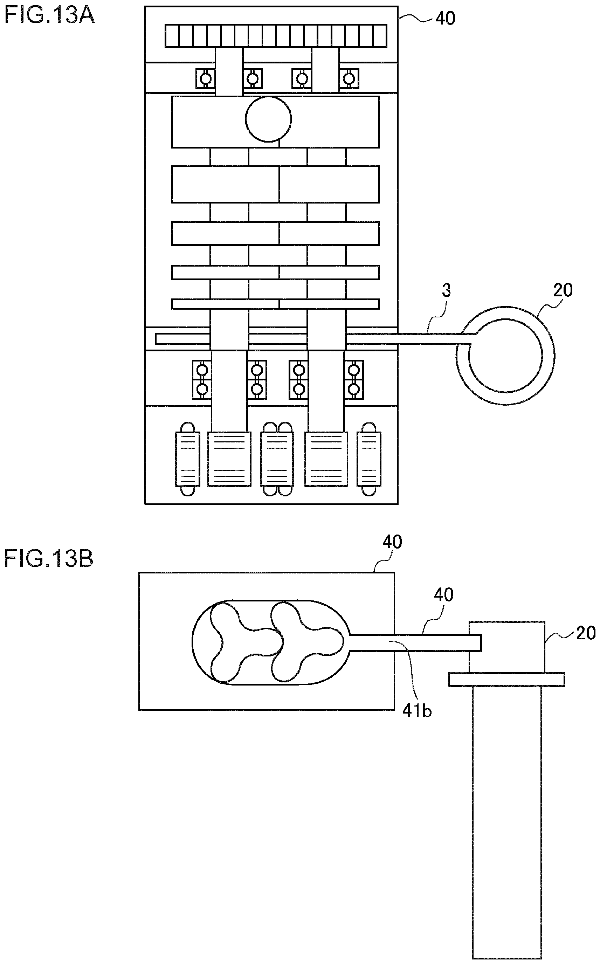

FIG. 13 is a schematic diagram showing a first example connection between a roots pump 40 and the combustion module 20. FIG. 13(a) is a top view of the roots pump 40 and the combustion module 20. FIG. 13(b) is a side view of the roots pump 40 and the combustion module 20. This drawing shows a transversely-installed roots pump 40. As shown in the drawing, the exhaust port 41b is formed in a side surface of the roots pump 40. One end of the flow path 3 extending in the horizontal direction is connected to the exhaust port 41b, and the other end is connected to an exhaust gas nozzle 23c of the combustion module 20. By virtue of this connection, the flow path 3 can be made very short, as in the case shown in FIG. 5.

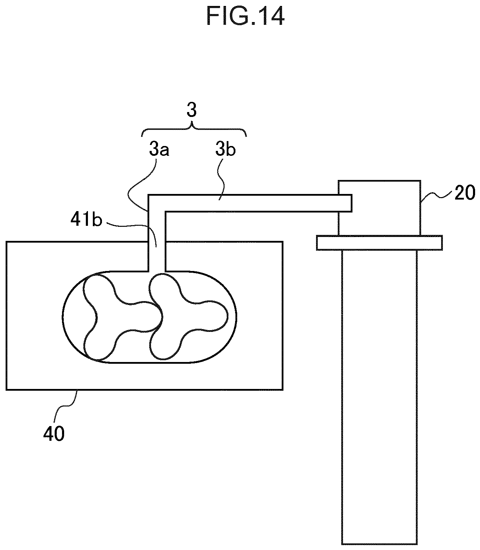

FIG. 14 is a schematic diagram showing a second example connection between a roots pump 40 and the combustion module 20, and is also a side view of the roots pump 40 and the combustion module 20. As shown in the drawing, the exhaust port 41b is formed in the upper surface of the roots pump 40. The flow path 3 has an L shape formed with a vertical portion 3a and a horizontal portion 3b. The lower end of the vertical portion 3a is connected to the exhaust port 41b, and one end of the horizontal portion 3b is connected to an exhaust gas nozzle 23c of the combustion module 20. By virtue of this connection, the height of the combustion module 20 can be increased by the amount equivalent to the height of the roots pump 40.

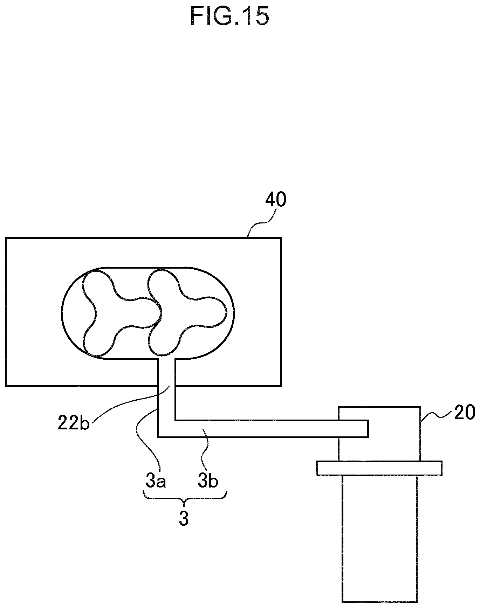

FIG. 15 is a schematic diagram showing a third example connection between a roots pump 40 and the combustion module 20, and is also a side view of the roots pump 40 and the combustion module 20. As shown in the drawing, the exhaust port 41b is formed in the lower surface of the roots pump 40. The flow path 3 has an L shape formed with a vertical portion 3a and a horizontal portion 3b. The upper end of the vertical portion 3a is connected to the exhaust port 41b, and one end of the horizontal portion 3b is connected to an exhaust gas nozzle 23c of the combustion module 20. Where the processing capacity of the combustion module 20 does not need to be very large, this connection can be employed.

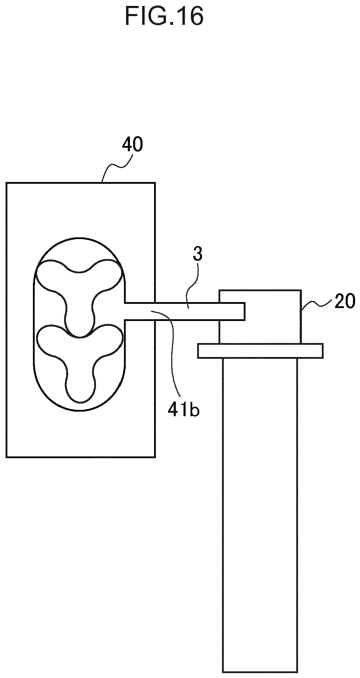

FIG. 16 is a schematic diagram showing a fourth example connection between a roots pump 40 and the combustion module 20, and is also a side view of the roots pump 40 and the combustion module 20. This drawing shows a vertically-installed roots pump 40. As shown in the drawing, the exhaust port 41b is formed in a side surface of the roots pump 40. One end of the flow path 3 extending in the horizontal direction is connected to the exhaust port 41b, and the other end is connected to an exhaust gas nozzle 23c of the combustion module 20. By virtue of this connection, the flow path 3 can be made very short.

As described above, in this embodiment, the main pump 1b and the abatement module 2 are connected directly to each other by the flow path 3, to form a module. Accordingly, swap maintenance can be easily performed. In addition to that, there is low risk of exhaust gas leakage.

Furthermore, the distance between the main pump 1b and the abatement module 2 can be shortened. Accordingly, even if a heater, such as the heater 97 shown in FIG. 20, is not provided, decrease in the temperature of the exhaust gas can be reduced or prevented, and there is no need to introduce the nitrogen gas for reducing the exhaust gas concentration. Thus, the total amount of the gas to be processed in the abatement module 2 decreases, and the abatement module 2 can be made smaller in size.

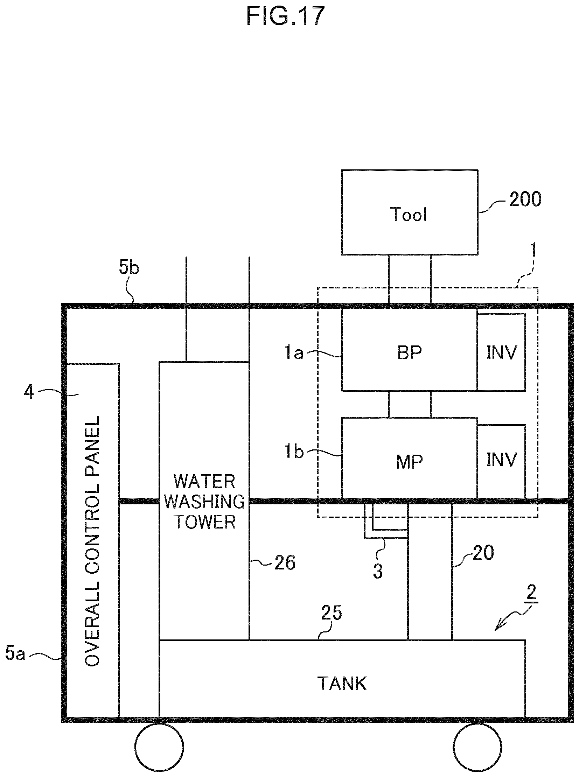

In the example shown in FIG. 1, the booster pump 1a and the main pump 1b in the dry pump 1 are detachably connected. However, the booster pump 1a and the main pump 1b may be integrated as shown in FIG. 17. In this case, the booster pump 1a is also accommodated in the lower frame 5a. The booster pump 1a and the tool 200 are then detachably connected.

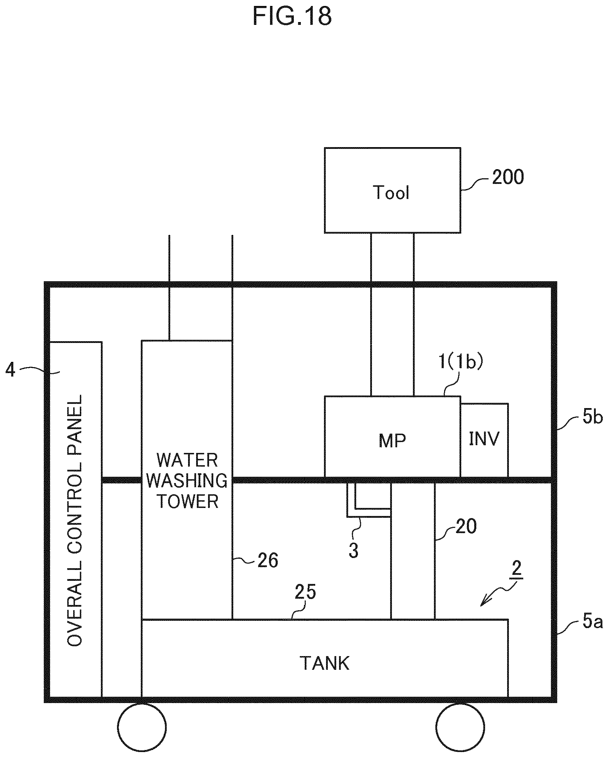

In a case where the amount of exhaust gas from the tool 200 is not large, the dry pump 1 may include only the main pump 1b, as shown in FIG. 18. In this case, the tool 200 and the main pump 1b are detachably connected.

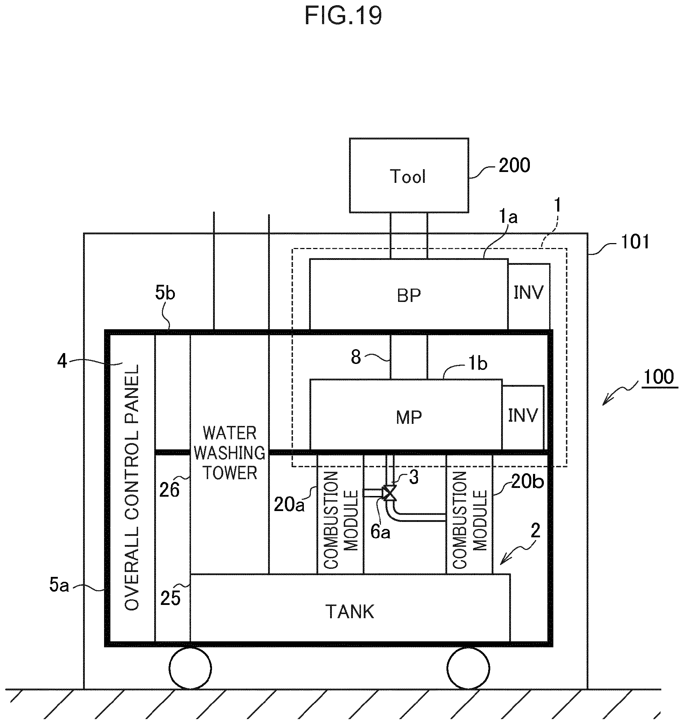

Further, as shown in FIG. 19, two or more combustion modules 20a and 20b may be provided in the package 101, and one of the combustion modules 20a and 20b and the main pump 1b are connected by a switching means 6. Specifically, the switching means 6 includes two three-way valves 6a and 6b connected in series between the combustion modules 20a and 20b. As opening and closing of the three-way valves 6a and 6b is appropriately controlled, one of the combustion modules 20a and 20b and the main pump 1b can be connected via the flow path 3, or one of the combustion modules 20a and 20b and a bypass can be connected.

In a case where the abatement module 2 has two or more combustion modules as above, even if trouble occurs in a combustion module during a process being performed by the tool 200, switching to another combustion module is immediately performed. Thus, the abatement function can be maintained, and loss of the wafer being processed by the tool 200 can be prevented. The switching may be performed manually, or the detection of trouble in the combustion module being used and the switching may be automatically performed.

## Claims

1. A dry vacuum pump with an abatement function comprising:
a dry pump (1) configured to evacuate exhaust gas from a tool (200);
an abatement module (2) configured to detox the exhaust gas evacuated by the dry pump (1); and
a flow path (3) configured to connect the dry pump (1) and the abatement module (2) directly to each other in an undetachable manner.

2. The dry vacuum pump with the abatement function according to claim 1, wherein
an exhaust port (11b, 41b) is formed in a side surface of the dry pump (1),
the abatement module (2) includes a combustion module (20) configured to burn the exhaust gas, and a nozzle (23c) configured to introduce the exhaust gas into the combustion module (20), and
the flow path (3) extends in a horizontal direction, one end of the flow path (3) being connected to the exhaust port (11b, 41b) of the dry pump (1), the other end of the flow path (3) being connected to the nozzle (23c) of the abatement module (2) .

3. The dry vacuum pump with the abatement function according to claim 1, wherein
an exhaust port (11b, 41b) is formed in an upper surface of the dry pump (1),
the abatement module (2) includes a combustion module (20) configured to burn the exhaust gas, and a nozzle (23c) configured to introduce the exhaust gas into the combustion module (20), and
the flow path (3) has an L shape formed with a vertical portion (3a) and a horizontal portion (3b), a lower end of the vertical portion (3a) being connected to the exhaust port (11b, 41b) of the dry pump (1), one end of the horizontal portion (3b) being connected to the nozzle (23c) of the abatement module (2) .

4. The dry vacuum pump with the abatement function according to claim 1, wherein
an exhaust port (11b, 41b) is formed in a lower surface of the dry pump (1),
the abatement module (2) includes a combustion module (20) configured to burn the exhaust gas, and a nozzle (23c) configured to introduce the exhaust gas into the combustion module (20), and
the flow path (3) has an L shape formed with a vertical portion (3a) and a horizontal portion (3b), an upper end of the vertical portion (3a) being connected to the exhaust port (11b, 41b) of the dry pump (1), one end of the horizontal portion (3b) being connected to the nozzle (23c) of the abatement module (2) .

5. The dry vacuum pump with the abatement function according to any one of claims 2 to 4, wherein
the combustion module (20) has a cylindrical shape, and
the nozzle (23c) is formed on a side surface of the combustion module (20), and introduces the exhaust gas in a tangential direction of the combustion module (20).

6. The dry vacuum pump with the abatement function according to any one of claims 1 to 5, wherein the dry pump (1) is one of a screw pump and a roots pump.

7. The dry vacuum pump with the abatement function according to any one of claims 1 to 6, wherein the dry pump (1) and the abatement module (2) are combined into a movable module to enable swap maintenance.

8. The dry vacuum pump with the abatement function according to any one of claims 1 to 7, wherein the dry pump (1) comprises:
a first pump (1a) connected to the tool (200); and
a second pump (1b) detachably connected to the first pump (1a), the second pump (1b) being undetachably connected to the abatement module (2) by the flow path (3).

9. The dry vacuum pump with the abatement function according to any one of claims 1 to 8, wherein the abatement module (2) includes:
at least two combustion modules (20a and 20b) configured to burn the exhaust gas; and
a switching means (6) configured to connect one of the at least two combustion modules (20a and 20b) to the dry pump (1) .

## Patentansprüche

1. Trockenvakuumpumpe mit Reinigungsfunktion, die Folgendes aufweist;
eine Trockenpumpe (1), die konfiguriert ist, um Abgas aus einem Werkzeug (200) herauszuleiten;
ein Reinigungsmodul (2), welches konfiguriert ist, um das Abgas zu entgiften, welches durch die Trockenpumpe (1) herausgeleitet wurde; und einen Flusspfad (3), der konfiguriert ist, um die Trockenpumpe (1) und das Reinigungsmodul (2) direkt miteinander in einer nicht trennbaren Weise zu verbinden.

2. Trockenvakuumpumpe mit Reinigungsfunktion nach Anspruch 1, wobei ein Auslassanschluss (11b, 41b) in einer Seitenfläche der Trockenpumpe (1) geformt ist,
das Reinigungsmodul (2) ein Verbrennungsmodul (20) aufweist, welches konfiguriert ist, um das Abgas zu verbrennen, und eine Düse (23c), die konfiguriert ist, um das Abgas in das Verbrennungsmodul (20) einzuleiten und
der Flusspfad (3) sich in einer horizontalen Richtung erstreckt, wobei ein Ende des Flusspfades (3) mit dem Auslassanschluss (11b, 41b) der Trockenpumpe (1) verbunden ist, wobei das andere Ende des Flusspfades (3) mit der Düse (23c) des Reinigungsmoduls (2) verbunden ist.

3. Trockenvakuumpumpe mit Reinigungsfunktion nach Anspruch 1, wobei ein Auslassanschluss (11b, 41b) in einer Oberseite der Trockenpumpe (1) geformt ist,
das Reinigungsmodul (2) ein Verbrennungsmodul (20) aufweist, das konfiguriert ist, um das Abgas zu verbrennen und eine Düse (23c), die konfiguriert ist, um das Abgas in das Verbrennungsmodul (20) einzuleiten und der Flusspfad (3) eine L-Form hat, die mit einem vertikalen Teil (3a) und einem horizontalen Teil (3b) geformt ist, wobei ein unteres Ende des vertikalen Teils (3a) mit dem Abgasanschluss (11b, 41b) der Trockenpumpe (1) verbunden ist, wobei ein Ende des horizontalen Teils (3b) mit der Düse (23c) des Reinigungsmoduls (2) verbunden ist.

4. Trockenvakuumpumpe mit Reinigungsfunktion nach Anspruch 1, wobei ein Auslassanschluss (11b, 41b) in einer Unterseite der Trockenpumpe (1) geformt ist,
das Reinigungsmodul (2) ein Verbrennungsmodul (20) aufweist, das konfiguriert ist, um das Abgas zu verbrennen, und eine Düse (23c), die konfiguriert ist, um das Abgas in das Verbrennungsmodul (20) einzuleiten und der Flusspfad (3) eine L-Form hat, die mit einem vertikalen Teil (3a) und einem horizontalen Teil (3b) geformt ist, wobei ein oberes Ende des vertikalen Teils (3a) mit dem Auslassanschluss (11b, 41b) der Trockenpumpe (1) verbunden ist, wobei ein Ende des horizontalen Teils (3b) mit der Düse (23c) des Reinigungsmoduls (2) verbunden ist.

5. Trockenvakuumpumpe mit Reinigungsfunktion nach einem der Ansprüche 2 bis 4, wobei
das Verbrennungsmodul (20) eine zylindrische Form hat und
die Düse (23c) an einer Seitenfläche des Verbrennungsmoduls (20) geformt ist und das Abgas in einer tangentialen Richtung des Verbrennungsmoduls (20) einleitet.

6. Trockenvakuumpumpe mit Reinigungsfunktion nach einem der Ansprüche 1 bis 5, wobei die Trockenpumpe (1) eine Schraubenpumpe oder eine Roots-Pumpe ist.

7. Trockenvakuumpumpe mit Reinigungsfunktion nach einem der Ansprüche 1 bis 6, wobei die Trockenpumpe (1) und das Reinigungsmodul (2) in einem bewegbaren Modul kombiniert sind, um eine Instandhaltung durch Austauschen zu ermöglichen.

8. Trockenvakuumpumpe mit Reinigungsfunktion nach einem der Ansprüche 1 bis 7, wobei die Trockenpumpe (1) Folgendes aufweist:
eine erste Pumpe (1a), die mit dem Werkzeug (200) verbunden ist, und
eine zweite Pumpe (1b), die in trennbarer Weise mit der ersten Pumpe (1a) verbunden ist, wobei die zweite Pumpe (1b) in nicht trennbarer Weise mit dem Reinigungsmodul (2) durch den Flusspfad (3) verbunden ist.

9. Trockenvakuumpumpe mit Reinigungsfunktion nach einem der Ansprüche 1 bis 8, wobei das Reinigungsmodul (2) Folgendes aufweist:
zumindest zwei Verbrennungsmodule (20a und 20b), die konfiguriert sind, um das Abgas zu verbrennen; und
Schaltmittel (6), die konfiguriert sind, um eines der mindestens zwei Verbrennungsmodule (20a und 20b) mit der Trockenpumpe (1) zu verbinden.

## Revendications

1. Pompe à vide sèche avec une fonction de réduction comprenant :
une pompe sèche (1) configurée pour évacuer les gaz d'échappement d'un outil (200) ;
un module de réduction (2) configuré pour désintoxiquer les gaz d'échappement évacués par la pompe sèche (1) ; et
un trajet d'écoulement (3) configuré pour connecter la pompe sèche (1) et le module de réduction (2) directement l'un à l'autre de manière non détachable.

2. Pompe à vide sèche avec la fonction de réduction selon la revendication 1, dans laquelle
un orifice d'échappement (11b, 41b) est formé dans une surface latérale de la pompe sèche (1),
le module de réduction (2) comprend un module de combustion (20) configuré pour brûler les gaz d'échappement, et une buse (23c) configurée pour introduire les gaz d'échappement dans le module de combustion (20), et
le trajet d'écoulement (3) s'étend dans une direction horizontale, une extrémité du trajet d'écoulement (3) étant connectée à l'orifice d'échappement (11b, 41b) de la pompe sèche (1), l'autre extrémité du trajet d'écoulement (3) étant connectée à la buse (23c) du module de réduction (2).

3. Pompe à vide sèche avec la fonction de réduction selon la revendication 1, dans laquelle
un orifice d'échappement (11b, 41b) est formé dans une surface supérieure de la pompe sèche (1),
le module de réduction (2) comprend un module de combustion (20) configuré pour brûler les gaz d'échappement et une buse (23c) configurée pour introduire les gaz d'échappement dans le module de combustion (20), et
le trajet d'écoulement (3) présente une forme en L formée d'une partie verticale (3a) et d'une partie horizontale (3b), une extrémité inférieure de la partie verticale (3a) étant connectée à l'orifice d'échappement (11b, 41b) de la pompe sèche (1), une extrémité de la partie horizontale (3b) étant connectée à la buse (23c) du module de réduction (2).

4. Pompe à vide sèche avec la fonction de réduction selon la revendication 1, dans laquelle
un orifice d'échappement (11b, 41b) est formé dans une surface inférieure de la pompe sèche (1),
le module de réduction (2) comprend un module de combustion (20) configuré pour brûler les gaz d'échappement et une buse (23c) configurée pour introduire les gaz d'échappement dans le module de combustion (20), et
le trajet d'écoulement (3) présente une forme en L formée d'une partie verticale (3a) et d'une partie horizontale (3b), une extrémité supérieure de la partie verticale (3a) étant connectée à l'orifice d'échappement (11b, 41b) de la pompe sèche (1), une extrémité de la partie horizontale (3b) étant connectée à la buse (23c) du module de réduction (2).

5. Pompe à vide sèche avec la fonction de réduction selon l'une quelconque des revendications 2 à 4, dans laquelle
le module de combustion (20) a une forme cylindrique, et
la buse (23c) est formée sur une surface latérale du module de combustion (20), et introduit les gaz d'échappement dans une direction tangentielle du module de combustion (20).

6. Pompe à vide sèche avec la fonction de réduction selon l'une quelconque des revendications 1 à 5, dans laquelle la pompe sèche (1) est l'une parmi une pompe à vis et une pompe Roots.

7. Pompe à vide sèche avec la fonction de réduction selon l'une quelconque des revendications 1 à 6, dans laquelle la pompe sèche (1) et le module de réduction (2) sont combinés sous forme d'un module mobile pour permettre une maintenance d'échange.

8. Pompe à vide sèche avec la fonction de réduction selon l'une quelconque des revendications 1 à 7, dans laquelle la pompe sèche (1) comprend :
une première pompe (1a) connectée à l'outil (200) ; et
une deuxième pompe (1b) connectée de manière détachable à la première pompe (1a), la seconde pompe (1b) étant connectée de manière non détachable au module de réduction (2) par le trajet d'écoulement (3).

9. Pompe à vide sèche avec la fonction de réduction selon l'une quelconque des revendications 1 à 8, dans laquelle le module de réduction (2) comprend :
au moins deux modules de combustion (20a et 20b) configurés pour brûler les gaz d'échappement ; et
un moyen de commutation (6) configuré pour connecter l'un au moins des deux modules de combustion (20a et 20b) à la pompe sèche (1).
